# EUROPEAN PATENT APPLICATION

(11) **EP 2 725 467 A1**
(43) Date of publication of application: **30.04.2014**
(21) Application number: 12190380.1
(22) Date of filing: 29.10.2012
(51) Int. Cl.: G06F 3/0481, H04N 5/44

(54) **Information display system and method for displaying information**

(71) Applicant: TP Vision Holding B.V., 5656 AE Eindhoven (NL)
(72) Inventor: Quaedvlieg, Christian, 1097 JB Amsterdam (NL)
(74) Representative: Nederlandsch Octrooibureau

(57) **Abstract**

The invention provides a method and device for displaying information, the method comprising the steps of:

- receiving data;
- generating first output data based on the received data;
- receiving and monitoring a control signal, said control signal comprising location information relating to a current location and a selection;
- in response to a change in a selection status from a unselected state to a selected state, register the current location as a starting location;
- if, while the selection status remains in the selected state, the current location is at least momentarily at least a predetermined distance away from the starting location, add to the first output data a drawn rectangle having a corner corresponding to the starting location and an opposite corner corresponding to the current location;
- upon a following change from the selected state to the unselected state, generate second output data corresponding to a part of the first output data that is enclosed in the rectangle, wherein the second output data corresponds to an enlarged version of the data contained in the rectangle.

## Description

### Field of the invention

The invention relates to a device and method for displaying information, such as a web page, in particular for displaying a web page on a television device.

### Background of the invention

Information pages, such as web pages or digital publications, are typically shown on the display of a computer device, such as a monitor of a table top computer or the screen of a notebook device. Increasingly, other devices are equipped with network interfaces and adapted to display digital pages using an embedded viewer such as a web browser. Examples are connected televisions, set top boxes connected to televisions or monitors, mobile communication devices, tablet or pad computer devices, etc. Many of these devices are not optimal for reading information from. For example, a television display is located relatively far from the viewer, making text hard to read. A mobile device is typically held at close range, but the available screen is rather small. Therefore, a need exists to present web pages on such devices in a manner that makes them easier to view or read.

### Summary of the invention

The invention provides an Information display system, comprising
- a network device for receiving data;
- an input interface configured to receive a control signal comprising location information relating to a current location on a display indicated by a user and a selection status comprising an unselected and a selected state;
- an output signal unit for outputting a display signal for the display;
- a processing unit connected to the network device for receiving data to be displayed, connected to the input interface for obtaining the current location and selection status based on the control signal, and connected to the output signal unit for outputting first output data to be displayed.

The processing unit is configured to monitor the current location and the selection status, so it can follow the user selected location and the selection status. In addition, the processing unit is adapted to generate first output data based on the received data. In response to a change in the selection status from the unselected state to the selected state, the processing unit registers the current location as a starting location. If, while the selection status remains in the selected state, the monitored current location is at least momentarily at least a predetermined distance away from the starting location, the processing unit adds to the first output data a rectangle having a corner corresponding to the starting location and an opposite corner corresponding to the current location. Upon a following change from the selected state to the unselected state, the processing unit is configured to generate second output data corresponding to a part of the first output data, which part of the first output data is enclosed in the rectangle.

A rectangle is shown on the screen overlaying the display data and being updated in dependence of the current user input, so that the user can control the precise selection before confirming it. However, the rectangle is only shown or drawn if, in the selected state, the current location has changed by a predetermined distance. This allows the system to distinguish the case in which the user wants to select an item (e.g. "point and click" functionality) from the case in which the user wants to enhance a portion of the displayed data, while allowing the user to use a single select/unselect control for both functions. The predetermined distance can be expressed as a relative distance (e.g. 0.5%, 1%, 2%, 5% or more of the display diagonal) or an absolute distance (e.g. at least 10 pixels, 20 pixels, 30 pixels, or, using knowledge of the physical dimensions of the display, as 1 centimeter, 2 centimeter, etc).

With the area that is shown on the screen the user can thus mark an area of the displayed data (therefore a subset of the received data) that is to be displayed in an enhanced form. This enhanced form can be a zoomed form, that is, the second output data comprises the data enclosed in the rectangle and is displayed in a form that fills substantially the entire display area. Advantageously, the enhanced form may be rendered anew starting from the received data rather than from for example already rasterized first output data. It is understood that the important aspect is that the user indicates an area on screen that is to be enhanced. One convenient way of indicating an area is by overlaying or drawing a rectangle on the display. However, there are other ways according to the invention that also work, for example by darkening or lightening the existing pixels "underneath" the rectangle lines to be drawn, showing a form with rounded corners, only showing edges or corners of the indicated area, showing a cross-hair, etc. Unless otherwise indicated, "drawing (a rectangle)" can refer to any of these forms of indicating an area.

The control signal may comprise information relating to an absolute location on the display or a relative (i.e. change in) location. In the former case, the input interface may receive the absolute position directly (for example, from an input controller of a touch panel) or may determine the absolute position by performing calculations based on the signal received from the external control device (for example, if the received signal comprises optical sensor data from an external controller). In case of relative location signals, the processing unit or the input interface maintains current location data which is updated according to the received signal. A wide variety of input mechanisms can thus be used according to the invention.

In an embodiment, the received data comprises web page data. The web page data comprises HyperText Markup Language (HTML) data received via the HyperText Transfer Protocol (HTTP). The processing unit may implement web browser functionality.

In an embodiment, the system is also adapted to receive a video signal, such as a television signal. In an embodiment, the system receives a digital or analog television signal via a first interface and a digital data signal via the network interface. In an embodiment, the television signal and the data signal may be provided using the same physical interface. The system may generate an output video signal corresponding to a television broadcast. An advantage of integrating the invention in a television, or a set top box for a television, is ease of use - while watching television a user can consult another information source, such as a web page, without requiring to use another device. A built-in disadvantage of a television, the fact that the display is typically too far away for convenient text reading, is overcome by the present invention.

In an embodiment according the invention, a control is provided for reverting from outputting the second output data to outputting the first output data. In the context of a web browser, the control may be the 'back' button. That is, in the enhanced/enlarged mode (e.g. when showing the second output data), the 'back' button has the functionality of returning to the previous viewing mode. In the standard viewing mode (e.g. when showing the first output data) the 'back' button has the standard functionality, i.e. returning to the previous page.

In an embodiment according the invention, the rectangle is drawn so that the aspect ratio of the rectangle has a pre-determined aspect ratio, such as 16:9 or 4:3.

In an embodiment according the invention, the system includes a display (17). Examples of such systems are television sets and handheld devices such as mobile phones, smartphones, tablet computers, etc. In an embodiment, the display has the same pre-determined aspect ratio as the pre-determined aspect ratio of the rectangle. Examples of embodiments excluding a display are set top boxes for e.g. cable television or satellite receivers, audio/video receivers, recording devices, etc.

In an embodiment according the invention, the rectangle is automatically adjusted to match at least one nearby content boundary in the first output data. Content boundaries are often available in information pages. Examples are boundaries between different boxes or blocks in a web page, columns in an online (magazine) publication, the boundary between an inline figure and surrounding text, etc.

In an embodiment according the invention, a side of the rectangle is adjusted if said side is less than a predetermined distance away from a boundary in the first output data. Said predetermined distance can be in the range of 1% - 30% of the width or height of the rectangle, such as 5%, 10%, 20%, or 30% of the width or height of the rectangle.

In an embodiment according the invention, the second output data corresponds to a full-screen modus of an object contained in the rectangle. For example, if the user selects a rectangle that comprises an embedded video player of a web page, the second output data can correspond to a full-screen mode of the player.

In an embodiment according the invention, the system includes a control device for transmitting the control signal. In an embodiment, the control device is adapted to transmit a signal corresponding to an absolute display location to the input interface. An example of such a system is a control device which comprises an optical sensor adapted to cooperate with an optical emission unit associated with the display for determining a display location. In an embodiment according the invention, the control device is adapted to transmit a signal corresponding to an change in display location to the input interface. Examples of such embodiments are control devices having cursor (arrow) keys, a joystick, a trackpad, etc for moving a cursor on-screen.

The invention further provides a method for displaying information, the method comprising
- receiving data;
- generating first output data based on the received data;
- receiving a control signal comprising information relating to a current location on a display and a selection status comprising an unselected and a selected state;
- in response to a change in the selection status from the unselected state to the selected state, register the current location as a starting location;
- if, while the selection status remains in the selected state, the current location is at least momentarily at least a predetermined distance away from the starting location, add to the first output data a drawn rectangle having a corner corresponding to the starting location and an opposite corner corresponding to the current location;
- upon a following change from the selected state to the unselected state, generate second output data corresponding to a part of the first output data that is enclosed in the rectangle.

Embodiments of the method according to the invention may be combined with any of the system features as described a above and in the following detailed description.

The invention further provides a computer software product stored on a recording media and comprising a set of instructions to enable an information display system to function as a system as described above and in the following detailed description when a processor of the system executes said set of instructions..

### Brief description of the Figures

On the attached drawing sheets,
- figure 1 schematically shows a television device according to an embodiment of the invention;
- figures 2a-2c schematically show control devices according to embodiments of the invention;
- figure 3 schematically shows a rendered web page;
- figures 4a-4c schematically show example display signals according to embodiments of the invention;
- figures 5 and 6 schematically demonstrate aspects of embodiments of the invention; and
- figure 7 schematically presents processing actions according to an embodiment of the invention.

### Detailed description

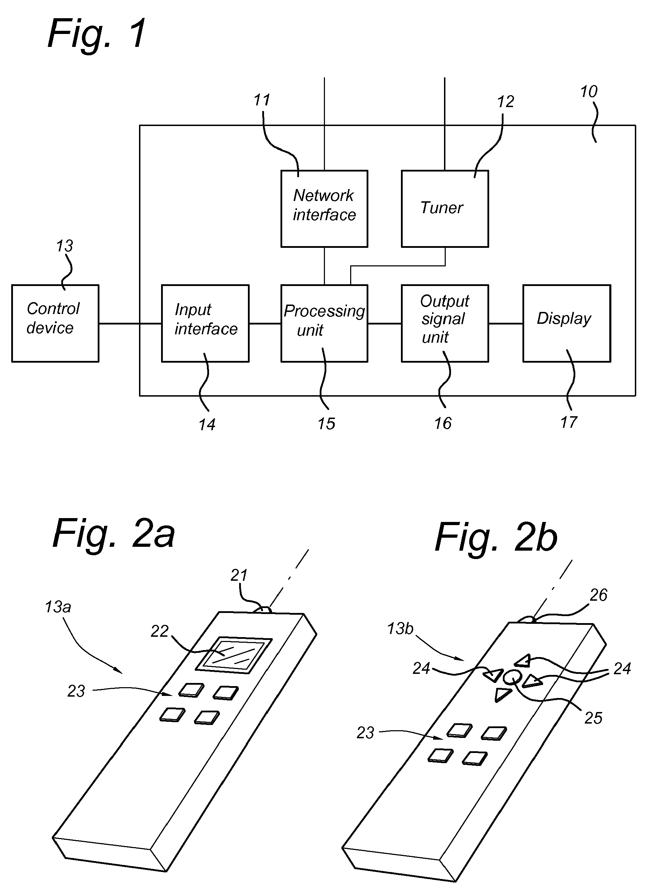

Figure 1 schematically shows a television device 10 according to an embodiment of the invention. The device comprises a network interface 11, a tuner 12, an input interface 14, a processing unit 15, an output signal unit 16, and a display 17. The device is configured to receive control input from a user via a control device 13, which control device can be, for ease of use, a remote control device.

The network interface 11 is configured to communicate with a data network, such as a wired or wireless packet switched network. It may be configured to communicate with web servers connected to the internet through the data network. The network interface 11 can thus receive data related to web pages from said web servers. The interface is connected to the processing unit 15, so that the processing unit can process the received data.

In an embodiment, a tuner 12 is present for receiving a television signal from a television network. The television network may share a physical cable with the data network, but it may also be a separate network. The television network can be adapted to carry any known television/video signal, e.g.. any analog or digital television format, a packet-switched video format, etc. The tuner 12 may send the received and potentially processed signal to the processing unit 15 for further processing (as shown in figure 1), or it may also send it directly to the output signal unit 16 for incorporation in the output signal for the display 17.

The input interface 14 is adapted to receive a signal from the control device 13, and to provide a signal to the processing unit 15. In an embodiment, the provided signal comprises at least 1) a location on the display that is currently being pointed at, or otherwise selected, by the user through the control device 13 and 2) a control status, such as the status of a button, which has at least a "selected" state (for example, corresponding to the button being pressed) and an "unselected" state (for example, corresponding to the button not being pressed). The input interface 14 may be adapted to provide at regular intervals (say every 20 ms) a current location and status signal to the processing unit 15, so that the processing unit can monitor the current location and selection status.

The processing unit 15 is the main controller of the device. The skilled person will realize that the processing unit 15 could be formed as a monolithic device for example in the form of a single integrated circuit device, or as a collection of specialized devices that together provide the functionality as here described in reference to the processing unit 15. Moreover, the processing unit can comprise dedicated hardware and/or programmable parts. The processing unit is configured to receive data from the network interface. In an embodiment, the processing unit is configured to communicate with remote web servers via the network interface 11 using the HyperText Transfer Protocol (HTTP).

The processing unit 15 can receive web page data and render the received data according to relevant standards (such as the HyperText Markup Language (HTML) standard, but also according to popular third party protocols such as for example Adobe Flash) to form a display signal. It should be noted that in the context of the present application, "web page data" is understood to include all data that is meant to be included in a rendered web page, so including inline images, embedded videos, Flash animations, etc. The aforementioned display signal can be a raster image, or for example a collection of low level rendering instructions to be executed by a display driver.

The processing unit 15 is also configured to receive the location and status data from the control device via the input interface. The control is thus able to continuously or at least regularly access a current selected location on the display and corresponding status. In addition, as already noted, the processing unit may receive video data and/or audio data and/or metadata (subtitles, electronic program guide data, etc) from the tuner 12 for further processing.

The output signal unit 16 is adapted to receive one or more signals for display and to output a display signal appropriate for an internal or external display. In the case of an internal display, the output format may be Low Voltage Differential Signalling (LVDS), and in the case of an external display the format can comply with the High-Definition Multimedia Interface (HDMI) standard. The output signal unit 16 may comprise a software or hardware driver to convert a stream of render commands into an output signal. The output signal unit 16 may be provided with means for blending or overlaying multiple images. The unit may comprise hardware devices for accelerated 2D and/or 3D drawing.

The invention is not limited to a television device 10. For example, a set-top box (STB) device according to the invention has the same components as the device 10, except that the main display device 17 is omitted. Likewise, the functionality according to the invention can be implemented in other devices, such as satellite television receivers, cable television modems, recording devices, etc.

Figures 2a-2c schematically show control devices according to embodiments of the invention. In figure 2a a remote control device 13a is shown. The device may comprise an receiver/transmitter 21 for receiving a signal from the device 10 or the display 17, and to transmit a signal that is based on the received signal to the input interface 14 of the device 10. The processing unit 15 can then determine from the received signal at the input interface 14, to which point on the display the user of the device 13a is currently pointing. Such arrangements for detecting a pointed-at location on a screen are known. A known example is a remote that is configured to receive light emitted from a light bar placed in the vicinity of the display. Control device 13a furthermore comprises a button 22. In an embodiment, while the button is pressed the control device uses the transmitter 21 to regularly (e.g. every 20 ms) send a predetermined signal indicated a depressed button to the input interface 14. The processing unit can then be configured to interpret a received predetermined signal to indicate that for at least the next 20 ms the control state of the device is "selected". In the absence of a received predetermined signal, the state will be designated as "unselected". The device 13a comprises further user controls 23, of which a state is also transmitted to the input interface 14 for processing by the processing unit 15. One of the further controls may implement a "back" function for returning to a previous web page.

In an alternative embodiment, numeral 22 in figure 2a does not represent a button but rather a touch pad. Touch pad input controls are well known, for example as used in notebook computers. By moving a finger across the touch pad, the user may move a cursor on the display, and so indicate a location on the display. One of the further controls 23 may then be configured to indicate the "selected" or "unselected" state.

In figure 2b a remote control device 13b is shown having arrow keys 24 for moving a cursor on screen in order to indicate a location on the display. In this embodiment, and also in the touch pad embodiment referenced above, only a transmitter 26 needs to be provided as the device now does not need to receive data for determining its relative position or orientation with respect to the display.

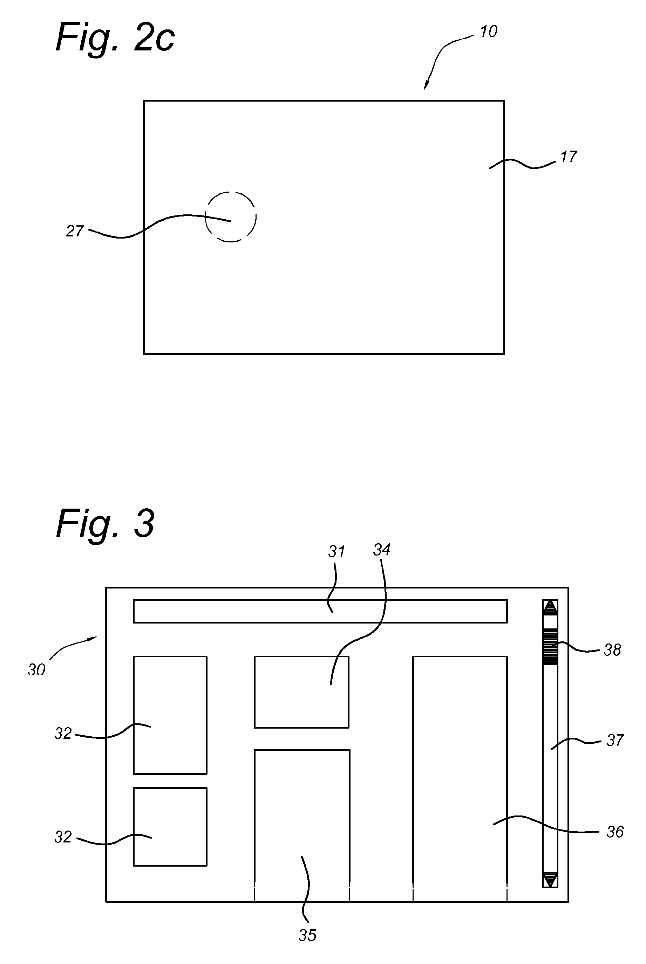

Figure 2c schematically shows an embodiment in which the control device 13 and the display are integrated 17: the display 17 is in this case formed as a touch panel display. By touching the display at location 27, the user can indicate said position, and selected location data will be sent to the processing unit 15 via the input interface 14. While the user touches the panel, the state of the control device is "selected". Once the contact with the panel is lost, the state is reset to "unselected". In this embodiment, the control signal is thus generated by the touch screen in response to user interaction.

Figure 3 schematically shows a rendered web page 30 as can be shown on the display 17. It is now common to have a web page 30 comprising different blocks or screen components, 31, 32, 34, 35, 36. As an example, a news site may provide a title banner in box 31, subscriber login forms in boxes 32, an embedded video in video component 34, a written text in box 35, and a list of further topics in box 36. Boxes 35 and 36 may not be able to fit on the screen. In that case a vertical scroll bar 37 is provided with a scroll control 38 that can be moved to vary the slice of the page that is shown. Likewise, a horizontal scroll bar may be provided (not shown).

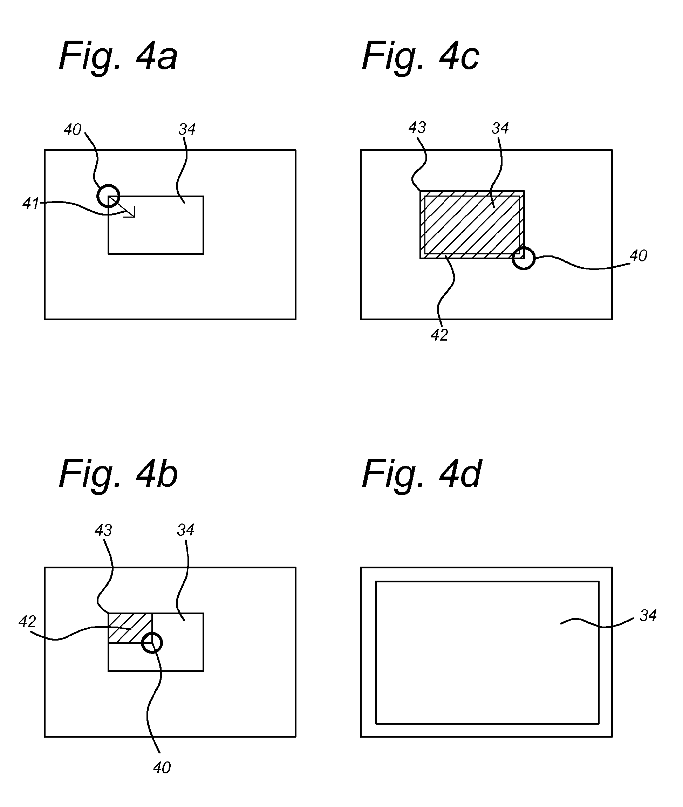

Figures 4a-4c schematically show example display signals ("screens") according to embodiments of the invention. These exemplary screens display the web page of figure 3, but for clarity all boxes except box 34 have been omitted.

In figure 4a, the user selects, using the control device 13, a location 40 on the display near the top left corner of box 34. The circle 40 as shown in figure 4a represents a cursor that is constantly redrawn to reflect the location that the control device currently points add, in order to aid the user in selecting the location. The user then presses the button (the device enters the "selected" state). This event marks the current location 40 as the starting location. Next, while keeping the button depressed, the user manipulates the control device so that the selected location moves away from the starting location 40 in the direction indicated by 41.

The processing unit 15 compares the current location as received from the control input interface with the stored starting location. Once the distance between both locations exceeds a predetermined threshold, the processing unit 15 enters a mode labelled "zoom selection" mode. In zoom selection mode, the processing unit causes the output signal unit to draw a rectangle 42 having one corner corresponding to the starting location and an opposite corner corresponding to the currently selected location 40. The predetermined threshold can be set in absolute terms, such as in pixels or centimetres, or in relative terms, such as corresponding to e.g. 1%, 2%, 5%, or 10% or more of the display diagonal distance.

In figure 4b, the rectangle covers part of box 34. The user keeps moving the selected location, until the rectangle covers an area of the screen that the user would like to see closer. In figure 4c, the exemplary selected screen area comprises box 34. However, it is not needed to select one complete web page element. A user may select any part of the displayed screen. It should also be noted that if the user moves the selected location so that the selected location is for example above and to the left of the starting location, the rectangle is simply redrawn accordingly, so that then the starting location becomes the bottom right corner and the currently selected location 40 is the top left corner. Once the user has selected a desired area for zooming, he or she releases the button, so that the status changes from the selected state to the unselected state.

The processing unit 15 registers the transition to the unselected state while in zoom selection mode, and concludes that the last selected rectangle is to be used as zoom box. The processing unit 15 then renders only the part of the web page that fits inside the selected rectangle, and displays said part as large as possible on the display, as shown in figure 4d. Any required horizontal or vertical scroll bars may be provided.

The zooming process as described in reference to figures 4a-4d may be repeated, in order to zoom in further on a selected part of the page. In an embodiment, the processing unit 15 is configured to receive a "back button pressed" signal from the control input interface, and to interpret that signal to go back to the previous zoom level. That way, by repeated pressing of the "back" button, each further zoom action is undone. As soon as all zoom actions are undone, the back button will have the familiar functionality of going back to the previous page.

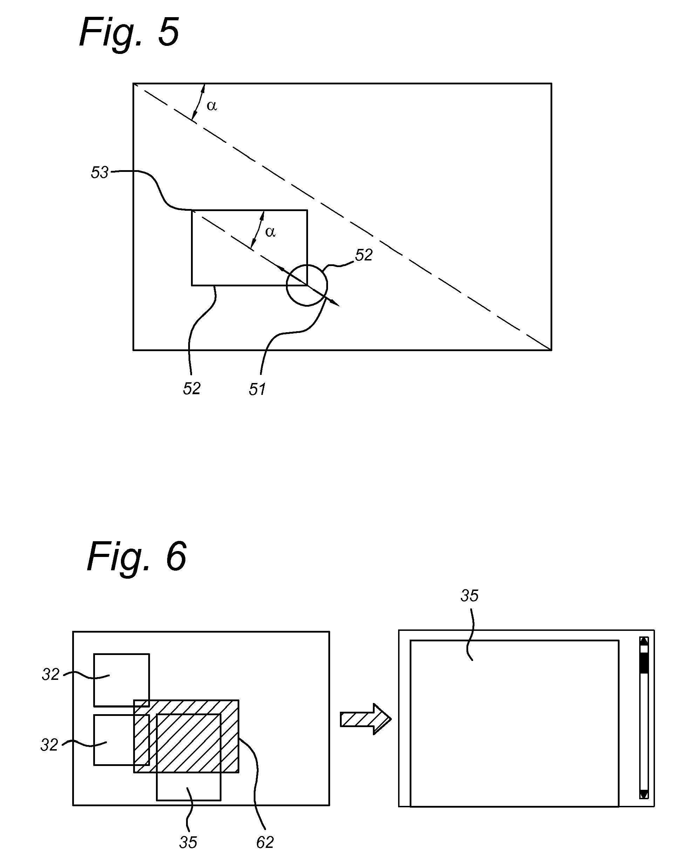

Figure 5 demonstrates a further embodiment of the invention. It may be advantageous to force the selected zoom rectangle to have the same aspect ratio as the display. That way, the area to be zoomed will fill essentially the full display area. One way in which this may be enforced, is by drawing an imaginary line along a direction 51 from the starting location 53 which runs parallel to a diagonal of the display. The currently selected position 52 is then, while the system is in the zoom selection mode, automatically put on the imaginary line, for example by projecting the actually determined position to the closest point on that line.

Figure 6 demonstrates a still further embodiment of the invention. When the user selects a zoom rectangle and releases the button, the system (in particular the processing unit 15) may be configured to "snap" the selected zoom rectangle so that is neatly fits around the main element in the user selected zoom rectangle. In the example of figure 6, the user selects a rectangle 62 that comprises most of box 35, and a little bit of boxes 32. In addition, some empty space to the left and right of box 35 is also selected. The system interprets this as a request by the user to zoom box 35. The zoomed image (see the rightmost part of figure 6) therefore has box 35 filling essentially the entire width of the screen, with a vertical scroll bar so that the bottom parts of box 35 may be made visible. The area between block 32 and 35 can thus be seen as a content boundary, marking distinct areas of content in the displayed information. In a practical implementation, the vicinity of a side of a rectangle to such a boundary (line or area) can be measured and compared with a threshold. For example, if the boundary is vertical and the distance between the left side of the rectangle 62 is less than 10% (or any other reasonable value) of the width of the rectangle 62, the system may decide to snap the left side of rectangle 62 to the vertical boundary between 32 and 35. For a horizontal boundary, the rectangle height can be used as relative comparison. However, the comparison need not be relative. It is also possible to perform the snapping action based on a predetermined number of pixels distance between a rectangle side and a parallel content boundary.

Another example of this "snap" concept is to interpret a user selection of a web page that comprises mostly an embedded video 34 as a request to show that embedded video in full screen mode. That way, a user can advantageously use a familiar control to achieve a function that would otherwise only be available through a dedicated control in the embedded video player interface. Likewise, a selection of an image can be interpreted as a request to display only that image in full screen. In general, such a selection of any object can be interpreted as a request to display that object in that objects native full-screen mode. In yet another embodiment, a special rendering mode is used for the selected object For example, if a text object is selected, the system may use a voice synthesizer to narrate the selected text.

In an embodiment, the system will automatically apply the "snap" mode when a predetermined percentage of the selected screen area 62 belongs to a single component or box, such as when 50%, or 75% or 90% of a selected area belongs to a single component or box.

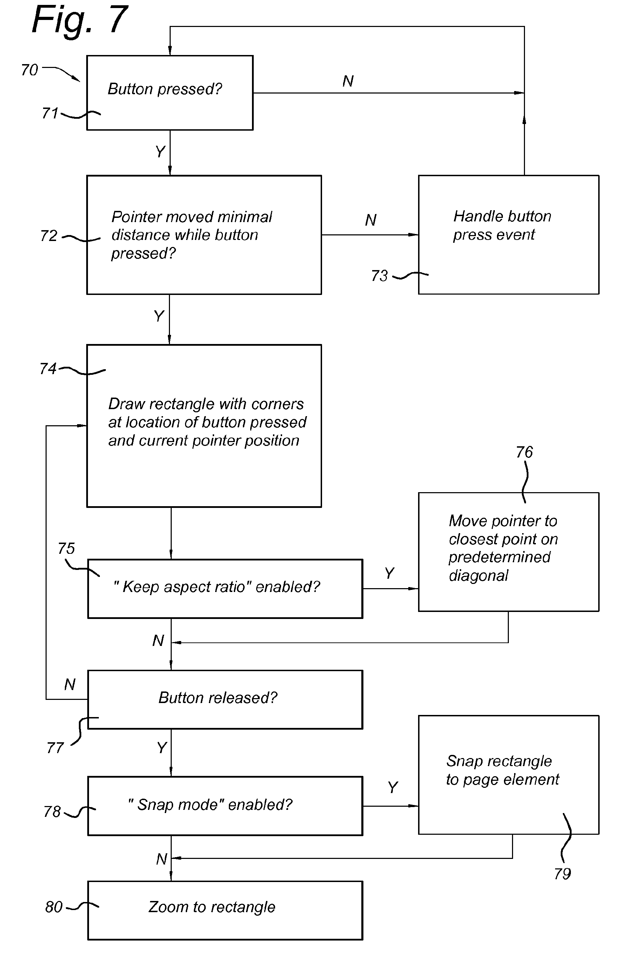

Figure 7 schematically presents a flow chart 70 of processing actions according to an embodiment of the invention. The system is initially in a state in which a web page is shown on the display, either in original or zoomed form.

In action 70, the system determines whether or not a button is pressed. If not, the system continues monitoring the control device. If a button is pressed, the system stores the selected location at the time of the button press event as a starting location, and monitors the current location and the state of the button. For the duration that the button remains pressed, so the control status is "selected". If, while the control status is "selected", the distance between the current location and the starting location exceeds a predetermined threshold, as is checked in action 72, the system will enter the "zoom selection" mode. If the button is released before the predetermined distance is exceeded, the button press/release event will be interpreted as usual in action 73. Such interpretation may include, for example, navigating to a selected hyperlink.

While the system is in zoom selection mode, in action 74 a rectangle is drawn having one corner corresponding to the starting location and the opposite corner corresponding to the currently selected location. If the option to "keep aspect ratio" is enabled (which is checked in action 75), the current location is moved in action 76 so that it coincides with a diagonal that runs through the starting location, parallel to a display screen diagonal. That way, the rectangle will always have the same aspect ratio as the screen. Such movement of the current location may be achieved by projecting the real current location on the diagonal through the starting location, that is by moving the current location to a point on said diagonal having the smallest distance to the real current location. When the button is released in action 77, the control moves to action 78. Otherwise, the control returns to action 74.

Now the zoom selection mode is ended, and the system prepares to display a zoomed-in part of the web page. In action 78, the system checks if the option "snap mode" is enabled. If it is, in action 79 the system looks for a single page element (e.g. a block or component) that seems to be of main interest to the user and adjusts the rectangle according, as has been explained in reference to figure 6. Finally, in action 80 a zoomed-in web page is displayed corresponding to the zoom rectangle.

In the foregoing description of the figures, the invention has been described with reference to specific embodiments thereof. It will, however, be evident that various modifications and changes may be made thereto without departing from the scope of the invention as summarized in the attached claims.

For example, the invention has been mainly described using the example of a web page being displayed. However, it will be clear that the invention can also be applied for other types of data to be displayed, such as Portable Document Format (PDF) content, digital magazines and newspapers, E-books, electronic comic books, etc.

Combinations of specific features of various aspects of the invention may be made. An aspect of the invention may be further advantageously enhanced by adding a feature that was described in relation to another aspect of the invention.

It is to be understood that the invention is limited by the annexed claims and its technical equivalents only. In this document and in its claims, the verb "to comprise" and its conjugations are used in their non-limiting sense to mean that items following the word are included, without excluding items not specifically mentioned. In addition, reference to an element by the indefinite article "a" or "an" does not exclude the possibility that more than one of the element is present, unless the context clearly requires that there be one and only one of the elements. The indefinite article "a" or "an" thus usually means "at least one".

## Claims

1. Information display system (10), comprising
- a network device (11) for receiving data;
- an input interface (14) configured to receive a control signal comprising location information relating to a current location on a display indicated by a user and a selection status comprising an unselected and a selected state;
- an output signal unit (16) for outputting a display signal for the display (17);
- a processing unit (15) connected to the network device (11) for receiving data, connected to the input interface (14) for obtaining the current location and selection status based on the control signal, and connected to the output signal unit (16) for outputting first output data to be displayed, wherein the processing unit (15) is configured to:
- monitor the current location (40) and the selection status;
- generate first output data based on the received data;
- in response to a change in the selection status from the unselected state to the selected state, register the current location (40) as a starting location;
- if, while the selection status remains in the selected state, the monitored current location is at least momentarily at least a predetermined distance away from the starting location, add to the first output data a rectangle (42, 52, 62) having a corner corresponding to the starting location (43) and an opposite corner corresponding to the current location (40); and
- upon a following change from the selected state to the unselected state, generate second output data corresponding to a part of the first output data, which part of the first output data is enclosed in the rectangle.

2. Information display system (10) according to claim 1, wherein the system is adapted to also receive a television signal and for outputting said signal.

3. Information display system (10) according to claim 1 or 2, wherein the second output data corresponds to an enlarged version of the data contained in the rectangle (42, 52, 62).

4. Information display system (10) according to any of the previous claims, wherein a control is provided for reverting from outputting the second output data to outputting the first output data.

5. Information display system (10) according to any of the previous claims, wherein the rectangle (52) is drawn so that the aspect ratio of the rectangle has a pre-determined aspect ratio, such as 16:9 or 4:3.

6. Information display system (10) according to any of the previous claims, wherein the rectangle (62) is adjusted to match at least one nearby content boundary in the first output data.

7. Information display system (10) according to claim 6, in which a side of the rectangle (62) is adjusted if said side is less than a predetermined distance away from a boundary in the first output data.

8. Information display system (10) according to claim 7, wherein said predetermined distance is in the range of 1% - 30% of the width or height of the rectangle, such as 5%, 10%, 20%, or 30% of the width or height of the rectangle.

9. Information display system (10) according to any of the previous claims, wherein the second output data corresponds to a full-screen modus of an object contained in the rectangle (62).

10. Information display system (10) according to any of the previous claims, including a control device (13, 13a, 13b) for transmitting the control signal.

11. Information display system (10) according to claim 10, wherein the control device (13, 13a) is adapted to transmit a signal corresponding to an absolute display location to the input interface (14).

12. Information display system (10) according to claim 11, wherein the control device (13, 13a) comprises an optical sensor (21) adapted to cooperate with an optical emission unit associated with the display (17) for determining a display location.

13. Information display system (10) according to claim 12, wherein the control device (13, 13b) is adapted to transmit a signal corresponding to an change in display location to the input interface (14).

14. Method for displaying information, the method comprising
- receiving data;
- generating first output data based on the received data;
- receiving a control signal, said control signal comprising location information relating to the current location and a selection status comprising an unselected and a selected state;
- monitoring the current location (40) and the selection status;
- in response to a change in the selection status from the unselected state to the selected state, register the current location as a starting location;
- if, while the selection status remains in the selected state, the current location is at least momentarily at least a predetermined distance away from the starting location, add to the first output data a drawn rectangle having a corner corresponding to the starting location and an opposite corner corresponding to the current location;
- upon a following change from the selected state to the unselected state, generate second output data corresponding to a part of the first output data that is enclosed in the rectangle.

15. Computer software product stored on a recording media and comprising a set of instructions to enable an information display system (10) to function as a system (10) according to any of the claims 1-13 when a processor of the system executes said set of instructions.
